Europäisches Patentamt

European Patent Office

Office européen des brevets

(19)

(11) EP 0 782 058 A1

(12) EUROPEAN PATENT APPLICATION

(43) Date of publication:
02.07.1997 Bulletin 1997/27

(51) Int. Cl.⁶: $G05D\ 1/02$, $G01C\ 21/20$

(21) Application number: 96120846.9

(22) Date of filing: 23.12.1996

(84) Designated Contracting States:
DE FR GB

(30) Priority: 26.12.1995 JP 339634/95

(71) Applicant: PIONEER ELECTRONIC
CORPORATION
Meguro-ku Tokyo (JP)

(72) Inventors:
• Sakai, Akira,
c/o Kawagoe Koujou Pioneer Elec. Co.
Kawagoe-shi, Saitama-ken 350 (JP)

• Odagawa, Satoshi,
Kawagoe Koujou Pioneer Elec. Co.
Kawagoe-shi, Saitama-ken 350 (JP)

(74) Representative: Bohnenberger, Johannes, Dr. et
al
Meissner, Bolte & Partner
Widenmayerstrasse 48
80538 München (DE)

(54) System for seeking a route for an automotive navigation system

(57) A system is provided for seeking an optimum route from a present point (P) to an end point (E). Route seeking means (82) determine a plurality of preliminary routes by connecting nodes through links between the present point and the end point. The determined routes are evaluated to select two routes. A partial route of each of the selected two routes is exchanged with a partial route of the other route to provide new routes. The new routes are evaluated to provide a desirable route.

FIG.2

**Description**

BACKGROUND OF THE INVENTION

The present invention relates to a system for seeking an optimum route from a present point to an end point, for an automotive navigation system to be mounted on a motor vehicle.

As a route seeking method, Dijkstra method is known. In the Dijkstra method, a route by which it is possible to reach an end point at a minimum cost is sought in a circular range in a circle having a center at the present point and a radius of the straight distance from the present point to the end point. The cost includes the length of the route, the number of corners and crosses, and the width of the road. Therefore, in order to seek an optimum route, a large number of routes in the circle must be sought. Consequently, it takes a very long time for seeking the optimum route by the Dijkstra method.

SUMMARY OF THE INVENTION

An object of the present invention is to provide a route seeking system which may seek an optimum route in a short time.

The system of the present invention seeks a route by a method which is obtained improving the genic algorithm for seeking an optimum route.

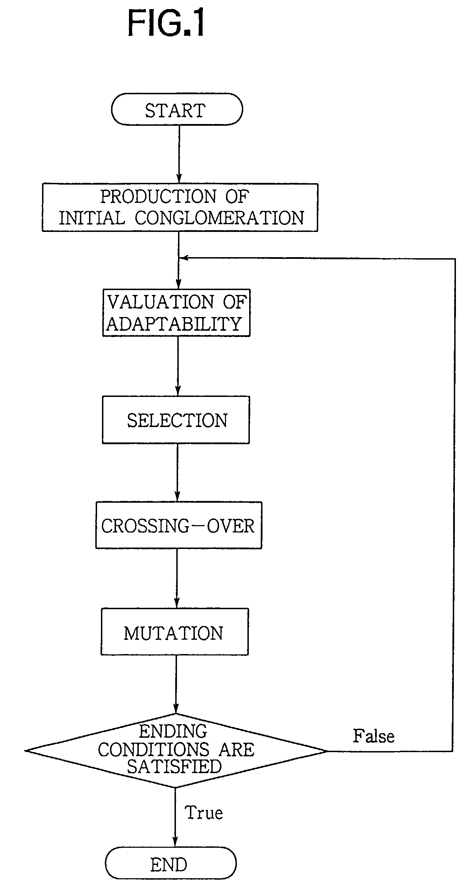

Fig. 1 shows a flowchart representing the progress of the genic algorithm. The genic algorithm is developed by the inventors for the car navigation system.

In accordance with an aspect of the present invention, there is provided a route seeking system for an automotive navigation system having position detecting means for detecting a present point setting means for setting an end point.

The seeking system comprises providing means for providing a plurality of preliminary routes by connecting nodes through links between the present point and the end point, valuing means for valuing the provided routes and for selecting at least two routes, crossing-over means for exchanging a partial route of each of the selected two routes with a partial route of the other route to provide first new routes, exchanging means for exchanging a node in at least one of the two routes with another node other than nodes included in the first new routes to provide at least one second new route, repeating means for repeating operations of the crossing-over means, and exchanging means until a predetermined condition is satisfied, whereby a desirable route is provided.

Twenty preliminary routes are provided, and the routes are valued based on costs including the length of the route, the number of corners to be turned, and the width of the road.

The predetermined condition is to repeat the operation fifty times.

In the present invention, a Dijkstra method for seeking a route having a minimum cost is also employed.

The preliminary routes are provided by connecting intermediate nodes in a circle having a diameter of a distance between the present point and the end point. The preliminary routes is obtained for seeking a link between nodes having the smallest angle to a line connecting the present point and the end point. The preliminary routes is also provided by selecting either of an ordinary direction route from the present point to the end point or a reverse direction route from the end point to the present point.

The crossing-over means is performed by cutting the two routes at a cross of the routes to provide the partial routes.

The exchanging means comprises means for selecting an arbitrary node as a new node for mutation, means for exchanging the new node with an arbitrary node in a circle having a diameter of distance between present point and end point, and means for setting intermediate nodes so as to provide a route.

The Dijkstra method is performed in a circle having a diameter of a distance between the present point and the end point.

These and other objects and features of the present invention will become more apparent from the following detailed description with reference to the accompanying drawings.

BRIEF DESCRIPTION OF DRAWINGS

Fig. 1 is a flowchart showing the progress of the genic algorithm;
Fig. 2 is a block diagram showing a system according to the present invention;
Fig. 3 is a diagram showing an example of routes as the production of an initial conglomeration;
Fig. 4 is a flowchart showing a method for producing the initial conglomeration;
Fig. 5 is a diagram showing routes having intermediate nodes between a present point and an end point in the initial conglomeration;
Fig. 6 is a flowchart showing a method for setting the intermediate nodes;
Fig. 7 is a diagram showing a method for determining a route;
Fig. 8 is a flowchart showing a method for connecting nodes;
Fig. 9 is a diagram for explaining an infinite loop;
Fig. 10 is a flowchart showing a further method for connecting nodes of Fig. 8;
Fig. 11 is a diagram showing an example of the node connection;
Fig. 12 is a diagram showing another example of the node connection;
Fig. 13 is a flowchart showing a process for setting nodes of Fig. 11;
Fig. 14 is a flowchart showing a process for the reverse order setting of Fig. 13;
Fig. 15 is a flowchart showing a method for connecting intermediate nodes;

Fig. 16 is a diagram showing an improved Dijkstra method;

Fig. 17 is a flowchart showing a method for selecting either of the two methods;

Fig. 18 is a diagram showing an example of the node connection;

Fig. 19 is a diagram showing another example of the node connection;

Fig. 20 is a flowchart showing a method for the simple crossing-over of Fig. 19;

Figs. 21 to 23 are diagrams showing a process for connecting nodes;

Fig. 24 is a flowchart showing a method for an improved crossing-over of Figs. 21 to 23;

Figs. 25 to 27 are diagrams showing a process of an example of a mutation;

Fig. 26 is a diagram showing a further process of the mutation;

Fig. 27 is a diagram showing new routes of the mutation;

Fig. 28 is a flowchart showing a method of the mutation of Figs. 25 to 27; and

Fig. 29 is a flowchart showing a complete progress of the genic algorithm of the present invention.

DETAILED DESCRIPTION OF THE PREFERRED EMBODIMENTS

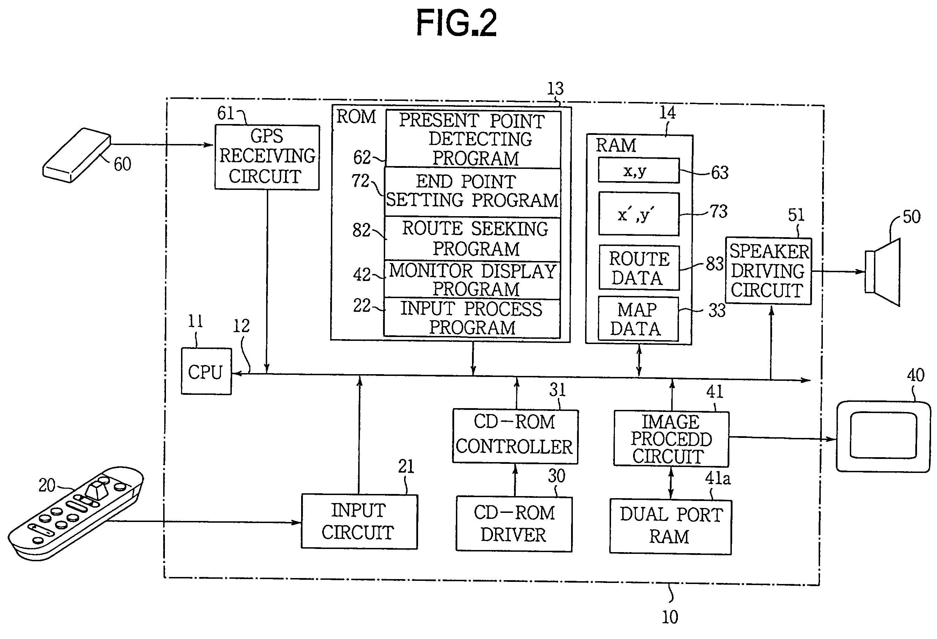

Referring to Fig. 2, the system according to the present invention comprises a main system 10, a route controller 20, a monitor 40, and a GPS (global positioning system) antenna 60.

The main system 10 comprises a CPU 11, an input circuit 21, a ROM 13, a RAM 14, a CD-ROM controller 31 connected to a CD-ROM driver 30, an image process circuit 41 connected to a dual port RAM 41a, a GPS receiving circuit 61 connected to the GPS antenna 60, and a speaker driving circuit 51 connected to a speaker 50. These elements are connected to the CPU 11 through a bus line 12. The image process circuit 41 is connected to the monitor 40.

The ROM 13 has a plurality of programs such as an input process program 22, a monitor display program 42, a present point detecting program 62, an end point setting program 72, and a route seeking program 82.

The RAM 14 has data storage areas 63, 73, a route data 83, and a map data 33.

The remote controller 20 has a plurality of operation keys corresponding to functions of the system. A desired process is selected by depressing a corresponding key. The remote controller 20 produces a command signal which is applied to the input process program 22 in the ROM 13 through the input circuit 21 for selecting a program stored in the ROM 13. The selected program is processed by the CPU 11.

As a map reading means for reading the map data 33 and storing the read data in the RAM 14, the CD-ROM driver 30 and the CD-ROM controller 31 are operated by a reading program (not shown). A CD-ROM disc having a map data recorded thereon is set in the CD-ROM driver 30 and controlled by the CD-ROM controller 31 for reading the map data.

As a visual display means, the monitor display program 42 operates to convert the map data 33 into picture data, and to store the data in the dual port RAM 41a. The image process circuit 42 is operated to display the stored data on the display of the monitor 40.

In order to indicate acoustic information through the speaker 50, a sound producing program (not shown) operates to apply the data to the speaker driving circuit 51 for producing a sound alarm through the speaker 50.

In order to detect the present location of the vehicle, the GPS antenna 60 is operated by the GPS receiving circuit 61 for receiving waves from a GPS satellite. The present point detecting program 62 detects the present point $(x, y)$ of the vehicle based on the received data. The data of position is stored in the area 63. An end point position $(x', y')$ is stored in the area 73.

In the present invention, routes from the present point to the end point are represented as a chromosome.

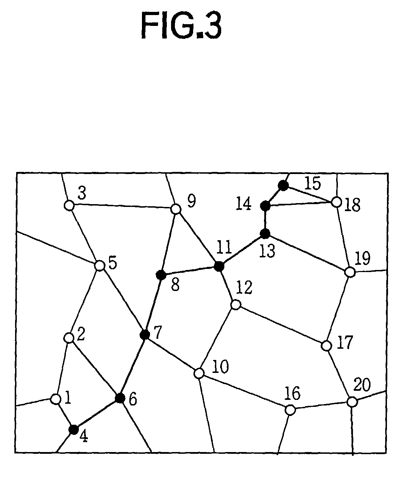

Fig. 3 shows routes as the production of an initial conglomeration. The route comprises crosses (called node hereinafter) and roads (called link hereinafter). The present point is a node 4 and the end point is a node 15. Selected nodes are represented by black dots and non-selected nodes are represented by white dots. If the chromosome is represented by the binary notation (1 and 0), it is 00010111001011100000. However, the representation becomes very long in actual routes, and can not indicate the order of the nodes and links. Therefore, in the present invention, a necessary route is represented only by node names and node numbers, as follows.

(present node)(node 1)(node 2) --- (node n-1)(node n)(end node)

The method for producing the initial conglomeration is explained hereinafter.

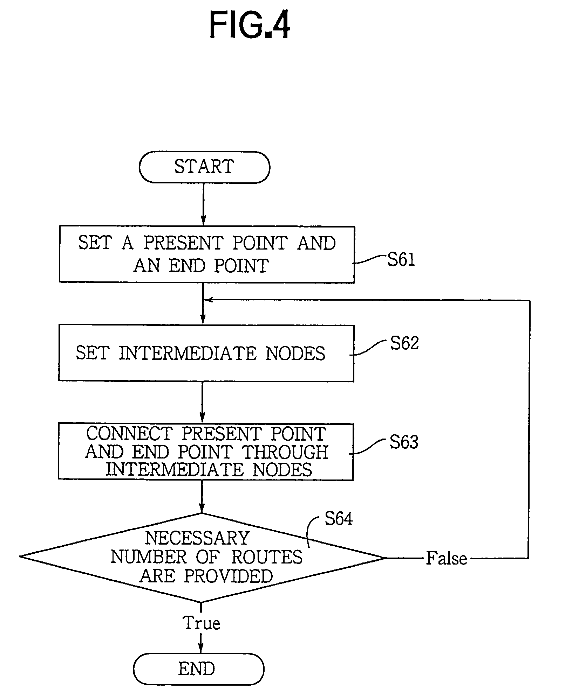

Referring to Fig. 4, a present point and an end point are set (step S61). Intermediate nodes are set between the present point and the end point (S62). The present point and the end point are connected by links through the intermediate nodes (S63) to provide a plurality of routes between the points. Fig. 3 shows an example of the routes. When necessary numbers of routes are provided (S64), the program ends.

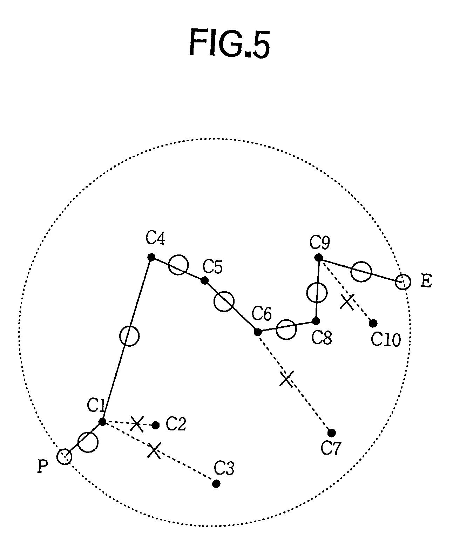

In order to set the intermediate nodes, a circle is drawn between a present point P and an end point E as a diameter of the distance between the points P and E as sown in Fig. 5.

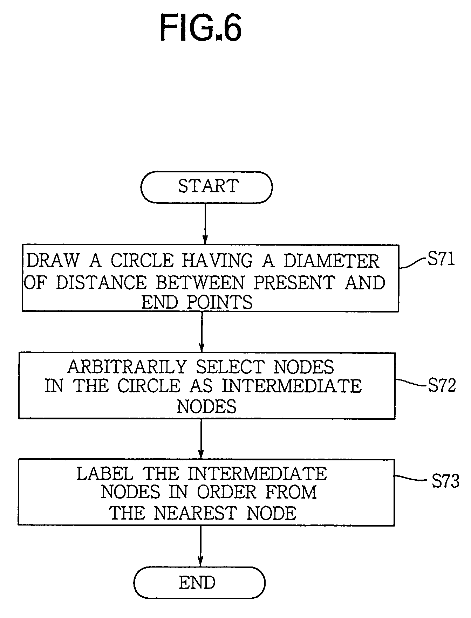

Fig. 6 shows the method for setting the intermediate nodes. A circle having a diameter of the distance between the present and end points is drawn (S72). Nodes in the circle are arbitrarily selected as intermediate nodes (S72). The intermediate nodes are labeled in order from the nearest node (S73).

Methods for connecting nodes are explained hereinafter.

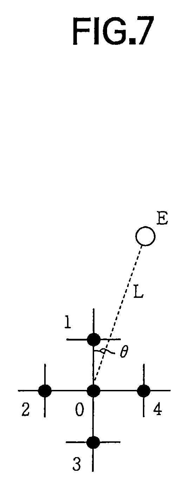

Referring to Fig. 7, in order to determine a link from a node 0 to a next node, an angle between a line L between the node 0 and the end point E and each of segments 01, 02, 03, and 04 is calculated. Since the angle θ between the line L and the segment 01 is minimum, the node 1 is selected as a Cmin. By repeating the process until the end point, a route is determined. This method is beneficial to quickly obtain an optimum route compared with the Dijkstra method in which costs are calculated.

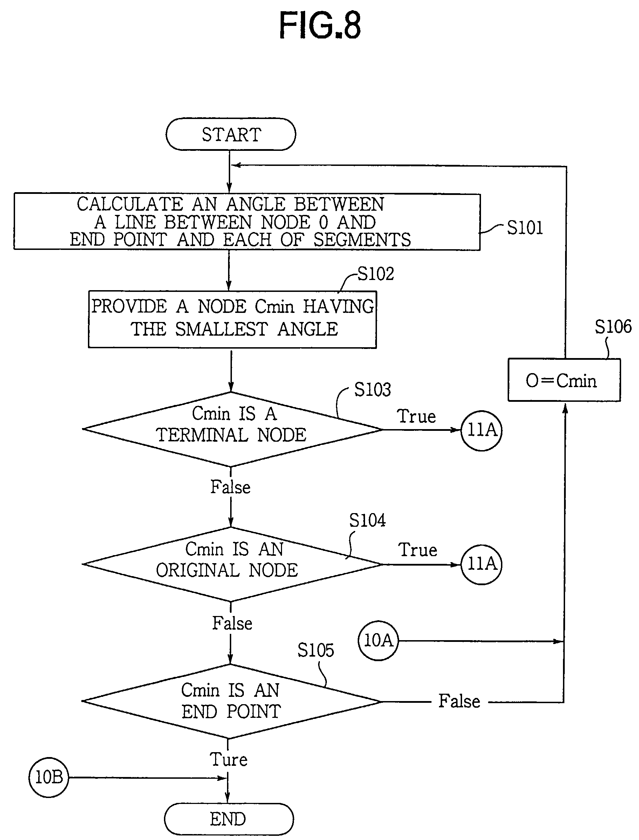

As shown in Fig. 8, the angle between the line L between node 0 and the end point and each of segments is calculated (S101). A node Cmin having the smallest angle is provided (S102). It is determined whether Cmin is a terminal node or not (S103). If not, it is determined whether Cmin is an original node or not (S104). If not, it is determined whether Cmin is an end point or not (S105). If yes, the program ends. If not, the program goes to a step S106 where 0=Cmin, and returns to the step S101.

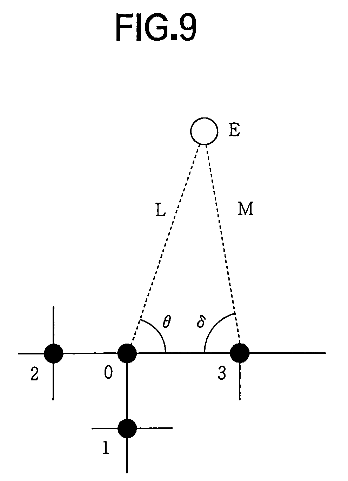

However, there is a problem in the method. Referring to Fig. 9, the angle θ between the segment 03 and the line L is minimum at the node 0 compared with the other segments 01 and 02. Therefore, the segment 03 is selected. Then, when viewed at the node 3, the angle δ between the segment 03 and the line M is minimum. As a result, the route returns to the original node 0. Thus, the route repeats between the nodes 0 and 3, and hence the process falls in the infinite loop. Such a node 3 is called a terminal node hereinafter.

The trouble is resolved by selecting a node having a second smaller angle. Nodes C2, C3, C7 and C10 of Fig. 5 are terminal nodes from which next nodes can not be set for some reason.

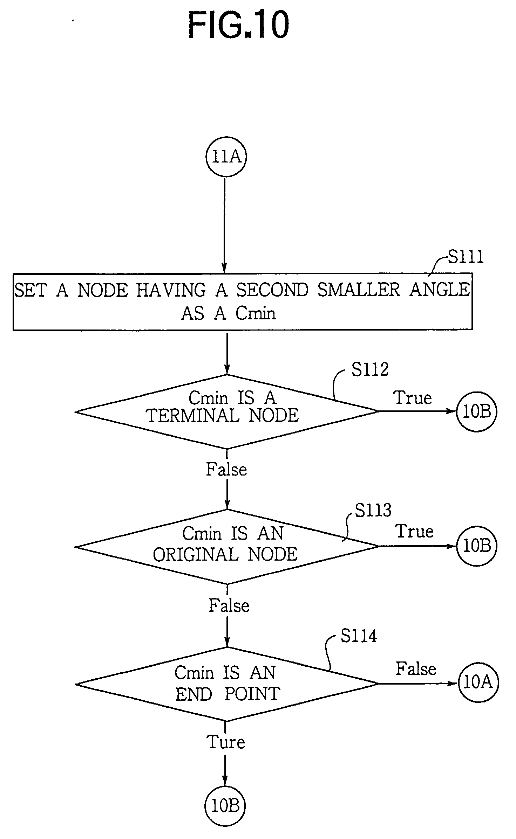

In the program of Fig. 8, if Cmin is a terminal node at the step S103, and if Cmin is the original node at the step S104, the program goes to a step S111 of Fig. 10 where a node having a second smaller angle is set as a Cmin. Then, the program goes to steps S112 to S114 which are the same as steps S103 to S105 of the program of Fig. 8. If Cmin is a terminal node at the step S112, and if Cmin is an original node at the step S113, the program ends. If Cmin is not an end point at the step S114, the program goes to the step S106 of Fig. 8.

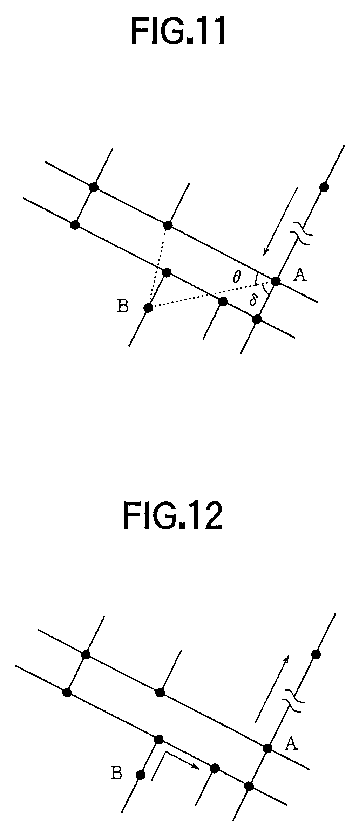

There is another problem. Referring to Fig. 11, at the node A, the angle θ is smaller than the angle δ with respect to a line A-B. However, a link can not be set from the node A to the node B. However, as shown in Fig. 12, links can be set from node B to node A. Namely, although a route can not be set in the driving direction, a route can be provided in the reverse order.

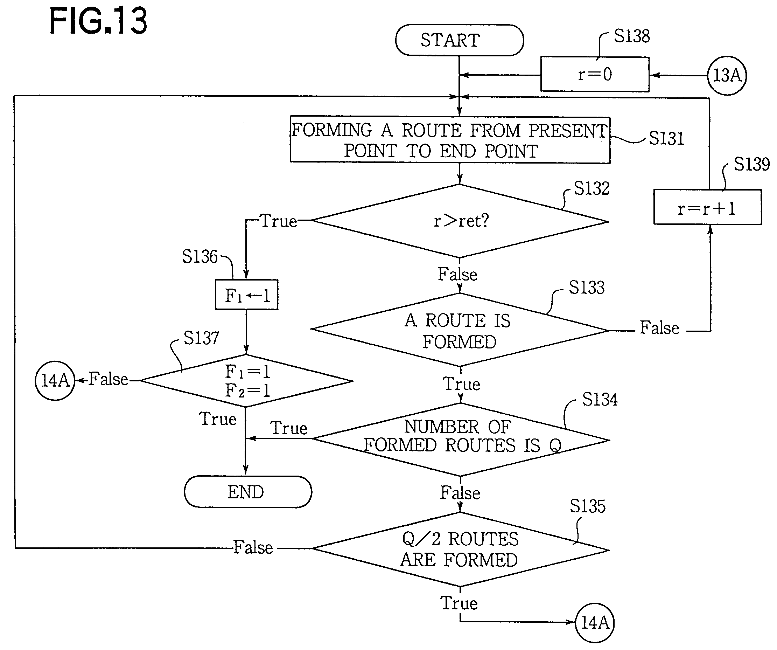

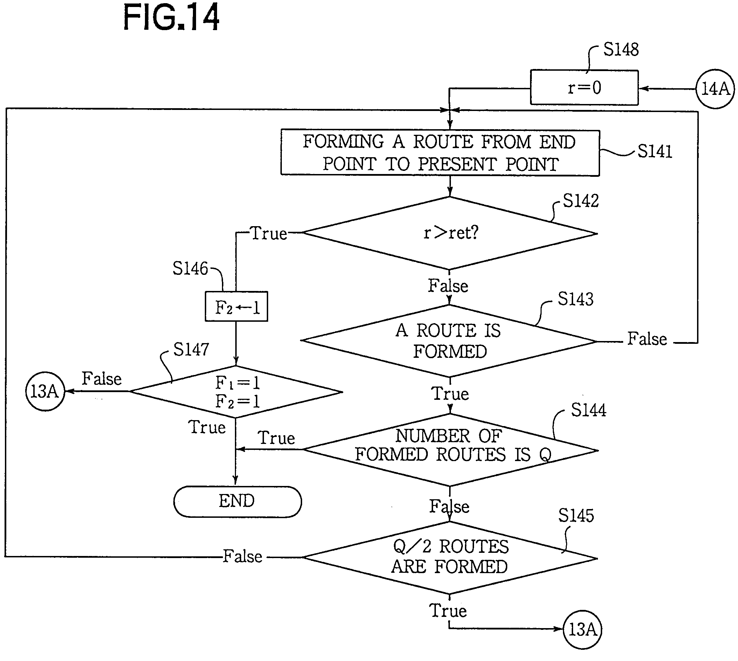

Figs. 13 and 14 show processes for the reverse order setting. In the figures, "r" is the number of connection failures, and "ret" is a maximum number of retrying of connection.

As shown in Fig. 13, a route from the present point to the end point is formed (S131). It is determined whether>r ret or not (S132). If not, it is determined whether a route is formed or not (S133). If yes, it is determined whether a number of formed routes is Q or not (S134). If not, it is determined whether Q/2 routes are formed or not (S135). If not, the program returns to the step S131. If yes, the program goes to a step S148 of the program of Fig. 14, which will be described hereinafter.

If r>ret at the step S132, the program goes to a step S136 where 1 is added to F1. It is determined whether F1=1 and F2=2 or not (S137). If yes, the program ends. If not, the program goes to the step S148 of Fig. 14.

If a route is not formed at the step S133, the program goes to a step S139 where r=r+1, and returns to the step S131.

If a number of formed routes is Q at the step S134, the program ends.

In the program of Fig. 14, r=0 at the step S148. A route from the end point to the present point is formed (S141). The program goes to steps S142 to S147 which are the same as steps S132 to S137 of Fig. 13. At steps S145 and S147, the program goes to the step S138 of Fig. 13.

Fig. 5 shows a route formed by connecting intermediate nodes by means of the above described methods.

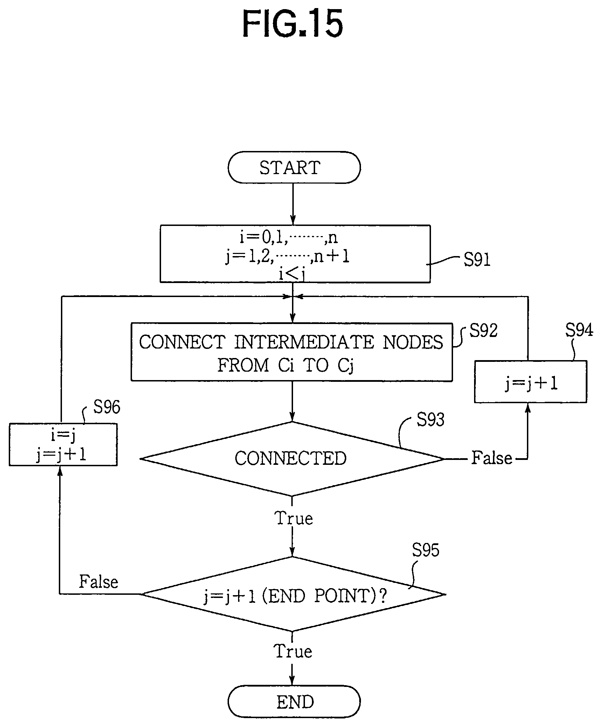

Fig. 15 shows a flowchart for connecting intermediate nodes. Nodes are represented as Ci and Cj.

At a step S91, i and j is set to i j, where i=0,1,...,n and j=1, 2,...,n+1. Intermediate nodes from Ci to Cj are connected (S92). It is determined whether they are connected or not (S93). If yes, it is determined whether i=j+1 (end point) or not (S95). If yes, the program ends.

If not at the step S93, the program goes to a step S94 where j=j+1 is set. If not at the step S95, the program goes to a step S96 where i=j and j=j+1 are set. The program returns to the steps S92, respectively.

Thus, a necessary number of routes can be obtained.

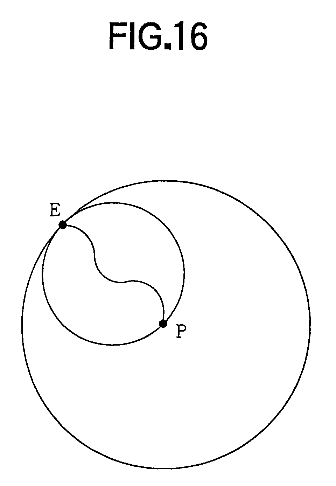

As before mentioned, the Dijkstra method requires a very long time for seeking an optimum route. Therefore, the inventors have improved the Dijkstra method. In the improved Dijkstra method, a circle having a diameter of the distance between the present point P and the end point E is drawn as shown in Fig. 16. In the limited range, the Dijkstra method is performed in order to obtain an optimum route having a minimum cost. This is the improved Dijkstra method.

It has been found that the genic algorithm is effective in an area in which the road density is large, and the improved Dijkstra method can find an optimum route in a short time in an area having a small road density. Therefore, a hybrid route seeking system is provided here.

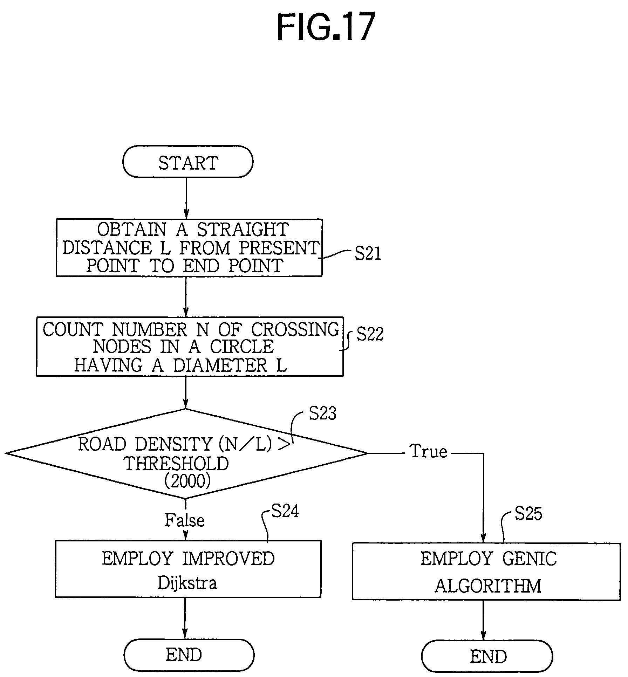

Fig. 17 is a flowchart for selecting either of the two methods.

A straight distance L from the present point to the end point is obtained (S21). A number N of crossing nodes in a circle having a diameter L is counted (S22). It is determined whether the road density (N/L) > threshold (2000) or not (S23). If not, the improved Dijkstra method is employed (S24). If yes, the genic algorithm is employed (S25).

It is advantageous to use crossing-over means and mutation means in the genic algorithm for seeking an optimum route. Both the means are described hereinafter.

In a simple crossing-over of the genic algorithm according to the present invention, a pair of routes (two parents) having a common node are selected. At common node, a partial route in one of the selected routes is exchanged with another partial route in the other selected route.

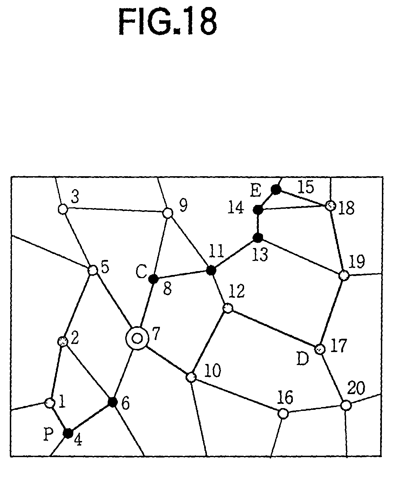

As shown in Fig. 18, a first route 1 (parent 1) comprises nodes 4, 6, (7), 8, 11, 13, 14, 15, and a second route 2 (parent 2) comprises nodes 4, 1, 2, 5, (7), 10, 12, 17, 19, 18, 15.

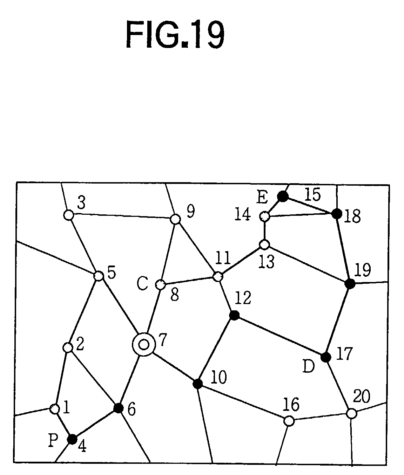

The common node is the node 7. Referring to Fig. 19, nodes 10, 12, 17, 19, 18 and 15 after the node 7 of the second route and nodes 8, 11, 13, 14 and 15 of the first route are exchanged with each other.

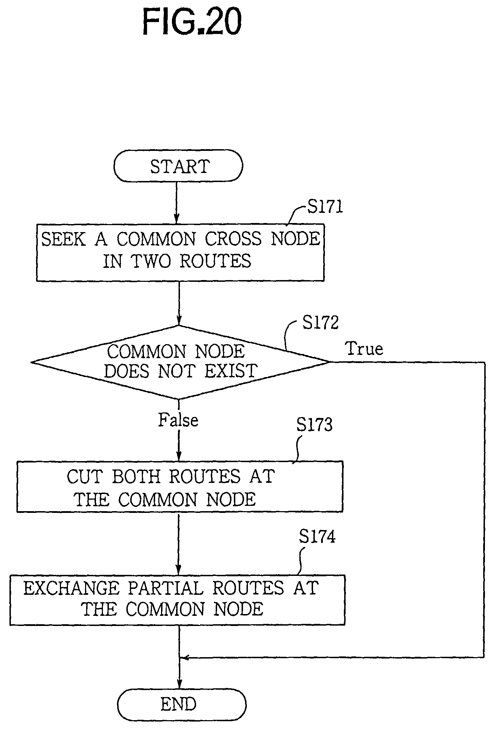

Fig. 20 shows a flowchart for the simple crossing-over.

A common cross node in two routes is sought (S171). It is determined whether the common node does not exist (S172). Both routes are cut at the common node (S173). Partial routes are exchanged at the common node (S174).

In the simple crossing-over, the common node can not be arbitrarily selected. In addition, a common node is not always included in both routes. In such a case, it is impossible to succeed the crossing-over.

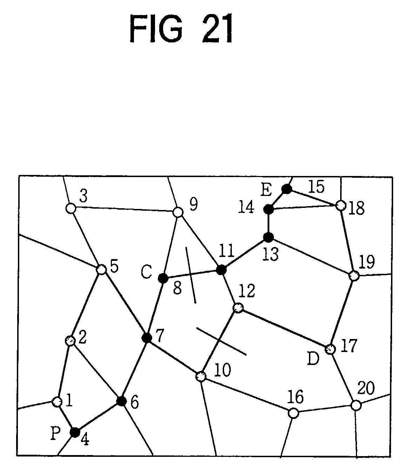

In order to resolve such problems, the inventors create an effective crossing-over. Referring to Fig. 21, the first and second routes are cut at arbitrary positions, respectively. Namely, the first route is cut between nodes 8 and 11, and the second route is cut between nodes 10 and 12.

The partial route before cutting point in the first route (nodes 4, 6, 7, 8) is combined with the partial route after the cutting point in the second route (nodes 12, 17, 19, 18, 15). A first new route 4, 6, 7, 8 ( ) 12, 17, 19, 18, 15 is provided.

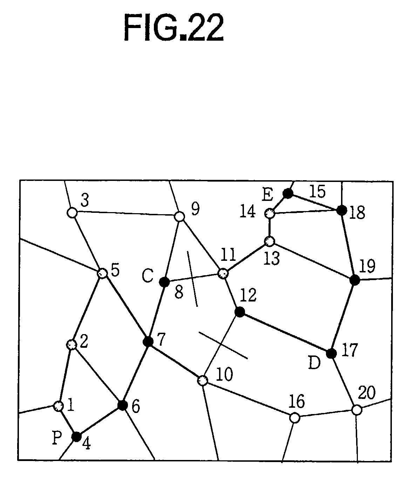

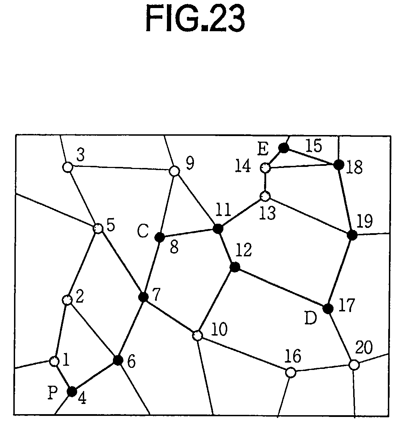

On the other hand, the partial route before the cutting point in the second route is combined with the partial route after the cutting point of the first route. Thus, a second new route 4, 1, 2, 5, 7, 10 ( ) 11, 13, 14, 15 is provided. Fig. 22 shows the new routes. However, there is non-connected nodes in each new route. Therefore, a new connecting node is selected for each route. In the first new route, the node 11 is selected, and the node 12 is selected in the second new route. Thus, complete first and second new routes are provided as shown in Fig. 23.

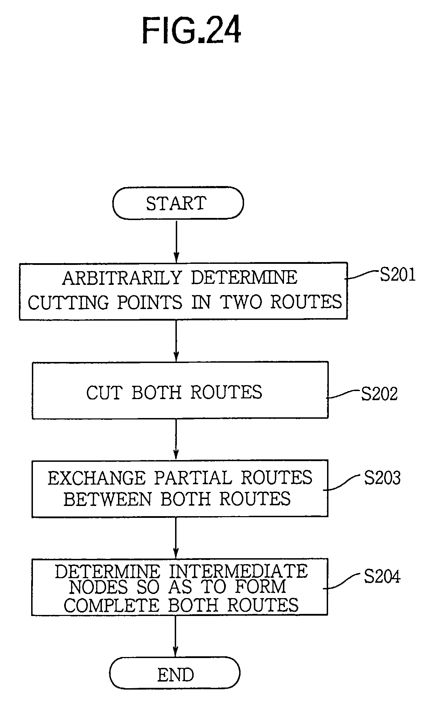

Fig. 24 shows a flowchart for the improved crossing-over.

Cutting points in two routes are arbitrarily determined (S201). Both routes are cut (S202). The partial routes between both routes are exchanged (S203). Intermediate nodes are determined so as to form complete both routes (S204).

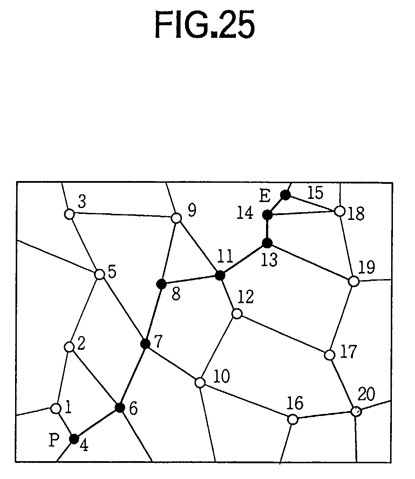

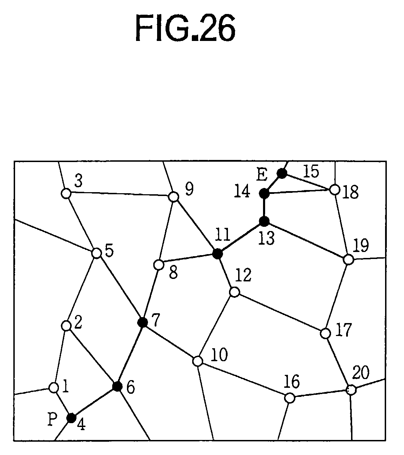

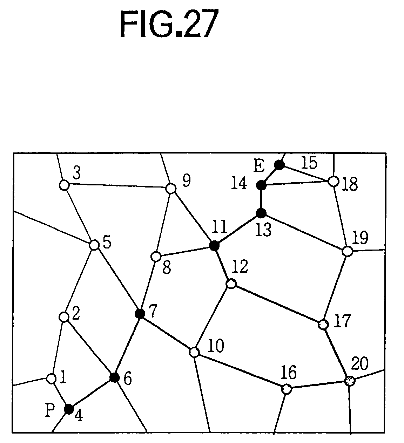

In the mutation of the genic algorithm, a new intermediate node is selected in a range, and the new node is applied to a selected route. Figs. 25, 26 and 27 show a process of an example of the mutation. In Fig. 25, a node 20 is determined as a new intermediate node, and the route comprising nodes 4, 6, 7, 8, 11, 13, 14 is selected. An arbitrary node is removed from the selected route. In the figure, the node 8 is removed as shown in Fig. 26. Instead of the removed node 8, the new node 20 is adapted. Since no route is formed in such a state, intermediate nodes are selected as is performed in the crossing-over. In the example, nodes 10, 16, 17, 12 are selected.

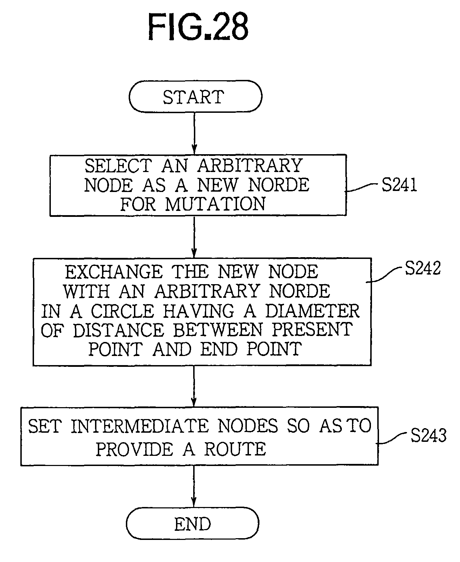

Fig. 28 shows a flowchart of the mutation.

An arbitrary node is selected as a new node for mutation (S241). The new node is exchanged with an arbitrary node in a circle having a diameter of distance between present point and end point (S242). Intermediate nodes are set so as to provide a route (S243).

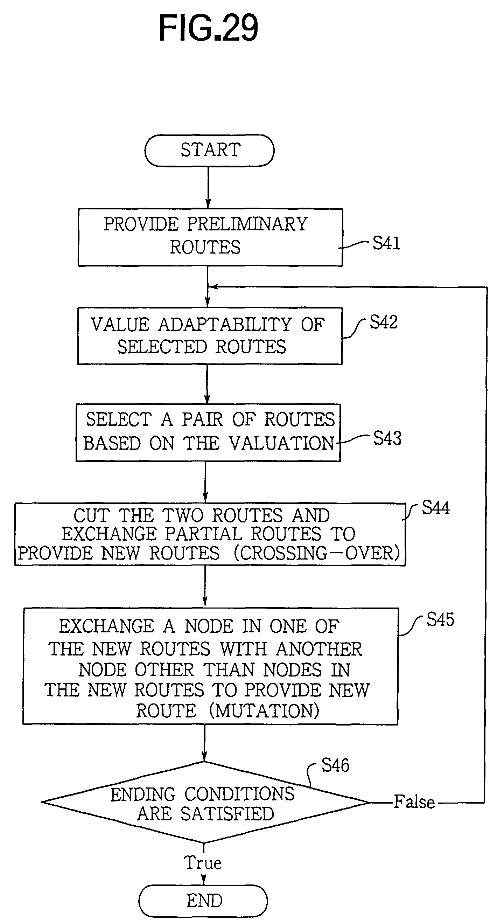

Fig. 29 shows a flowchart representing a complete progress of the genic algorithm of the present invention.

At the step S41, a necessary number of routes are selected. In accordance with experiments conducted by the inventors, the number is twenty routes. In the valuation at the step S42, the cost is valued. The cost includes the length of the route, the number of corners to be turned, the width of the road, and others. The ending condition is for example the number of genic processes. In accordance with experiments, the number is fifty times.

As shown in Fig. 29, preliminary routes are provided (S41) as the initial conglomeration. Adaptability of selected routes is valued (S42). A pair of routes are selected based on the valuation (S43). The two routes are cut, and partial routes are exchanged to provide new routes (crossing-over) (S44). A node in one of the new routes is exchanged with another node other than nodes in the new routes to provide a new route (mutation) (S45). It is determined whether ending conditions are satisfied or not (S46).

In accordance with the present invention, an optimum route from a present point to an end point is sought by a method which is composed by improving a genic algorithm. Therefore, the optimum route is found in a short time.

While the invention has been described in conjunction with preferred specific embodiment thereof, it will be understood that this description is intended to illustrate and not limit the scope of the invention, which is defined by the following claims.

**Claims**

1. A route seeking system for an automotive navigation system having position detecting means (62) for detecting a present point (P) and end point setting means (72) for setting an end point (E), the seeking system comprising route seeking means (82) including:

providing means for determining a plurality of preliminary routes by connecting nodes through links between the present point (x, y) and the end point (x', y');

evaluating means for valuing the provided routes and for selecting at least two routes;

crossing-over means for exchanging a partial route of each of the selected two routes with a partial route of the other route to provide first new routes;

exchanging means for exchanging a node in at least one of the two routes with another node other than nodes included in the first new routes to provide at least one second new route;

repeating means for repeating operations of said crossing-over means, and exchanging means until a predetermined condition is satisfied, whereby a desirable route is determined.

2. The system according to Claim 1, wherein at least twenty preliminary routes are provided by said providing means.

3. The system according to Claim 1 or 2, wherein the routes are evaluated based on factors including the length of the route, the number of corners to be turned, and the width of the road.

4. The system according to Claim 1, 2 or 3, wherein the predetermined condition is to repeat the operation at least fifty times.

5. The system according to any one of the Claims 1 to 4, further comprising selecting means for selecting a Dijkstra method for seeking a route having a minimum cost.

6. The system according to any one of the Claims 1 to 4, wherein the preliminary routes are provided by connecting intermediate nodes in a circle with a diameter set as the distance between the present point (P) and the end point (E).

7. The system according to Claim 6, wherein the providing means includes means for seeking a link between nodes having the smallest angle to a line connecting the present pint (P) and the end point (E)

8. The system according to Claim 7, wherein the providing means includes means for seeking a link between nodes having a second small angle to a line connecting the present point (P) and the end point (E).

9. The system according to any one of the Claims 1 to 4, wherein the providing means includes means for selecting either of an ordinary direction route from the present point to the end point or a reverse direction route from the end point to the present point.

10. The system according to any one of the Claims 1 to 4, wherein the crossing-over means is performed by cutting the two routes at an intersection of the routes to provide the partial routes.

11. The system according to any one of the Claims 1 to 4, wherein the crossing-over means is performed by cutting the two routes at different links of the routes to provide the partial routes.

12. The system according to any one of the Claims 1 to 11, wherein the exchanging means comprises means for selecting an arbitrary node as a new node for mutation, means for exchanging the new node with an arbitrary node in a circle having a diameter of distance between present point and end point, and means for setting intermediate nodes so as to provide a route.

13. The system according to Claim 5, wherein the Dijkstra method is performed in a circle having a diameter of a distance between the present point and the end point.

14. The system according to Claim 13, wherein the Dijkstra method is employed when the density of crosses in the circle is smaller than a set value.

# FIG.1

```
         ┌──────────┐
         (  START   )
         └────┬─────┘
              ↓
    ┌──────────────────────┐
    │    PRODUCTION OF      │
    │ INITIAL CONGLOMERATION│
    └──────────┬───────────┘
              ↓ ←──────────────────────────┐
    ┌──────────────────┐                    │
    │  VALUATION OF     │                   │
    │  ADAPTABILITY     │                   │
    └────────┬─────────┘                    │
             ↓                              │
    ┌──────────────────┐                    │
    │    SELECTION      │                   │
    └────────┬─────────┘                    │
             ↓                              │
    ┌──────────────────┐                    │
    │  CROSSING-OVER    │                   │
    └────────┬─────────┘                    │
             ↓                              │
    ┌──────────────────┐                    │
    │    MUTATION       │                   │
    └────────┬─────────┘                    │
             ↓                              │
        ◇─────────────◇                     │
       ╱   ENDING      ╲    False           │
      ◇ CONDITIONS ARE  ◇──────────────────┘
       ╲  SATISFIED    ╱
        ◇─────────────◇
             │ True
             ↓
         ┌──────────┐
         (   END    )
         └──────────┘
```

# FIG.2

# FIG.3

# FIG.4

```
            ┌─────────────┐
            │    START    │
            └──────┬──────┘
                   │
                   ▼
    ┌──────────────────────────┐
    │ SET A PRESENT POINT AND   │ ── S61
    │     AN END POINT          │
    └──────────────┬───────────┘
                   │
                   ▼
    ┌──────────────────────────┐
    │  SET INTERMEDIATE NODES   │ ── S62
    └──────────────┬───────────┘
                   │
                   ▼
    ┌──────────────────────────┐
    │  CONNECT PRESENT POINT    │ ── S63
    │  AND END POINT THROUGH    │
    │   INTERMEDIATE NODES      │
    └──────────────┬───────────┘
                   │
                   ▼           S64
            ╱─────────────╲
           ╱  NECESSARY    ╲
          ╱ NUMBER OF ROUTES ╲ ── False
          ╲  ARE PROVIDED    ╱
           ╲───────┬───────╱
                   │
                 True
                   │
                   ▼
            ┌─────────────┐
            │     END     │
            └─────────────┘
```

# FIG.5

# FIG.6

```
        ┌─────────────┐
        │    START    │
        └─────────────┘
               │
               ▼
┌──────────────────────────────────┐
│ DRAW  A  CIRCLE  HAVING  A  DIAMETER │── S71
│ OF  DISTANCE  BETWEEN  PRESENT  AND  │
│            END  POINTS             │
└──────────────────────────────────┘
               │
               ▼
┌──────────────────────────────────┐
│     ARBITRARILY  SELECT  NODES     │
│  IN  THE  CIRCLE  AS  INTERMEDIATE  │── S72
│              NODES                │
└──────────────────────────────────┘
               │
               ▼
┌──────────────────────────────────┐
│     LABEL  THE  INTERMEDIATE       │── S73
│      NODES  IN  ORDER  FROM         │
│        THE  NEAREST  NODE           │
└──────────────────────────────────┘
               │
               ▼
        ┌─────────────┐
        │     END     │
        └─────────────┘
```

# FIG.7

# FIG.8

START

CALCULATE AN ANGLE BETWEEN
A LINE BETWEEN NODE 0 AND
END POINT AND EACH OF SEGMENTS — S101

S102
PROVIDE A NODE Cmin HAVING
THE SMALLEST ANGLE

S106
O = Cmin

S103
Cmin IS A
TERMINAL NODE — True → (11A)

False

S104
Cmin IS AN
ORIGINAL NODE — True → (11A)

False

(10A)

S105
Cmin IS AN
END POINT — False

Ture

(10B)

END

# FIG.9

# FIG.10

```
                              (11A)
                                │
                                │
                                ▼                           S111
┌─────────────────────────────────────────────────────────┐
│   SET A NODE HAVING A SECOND SMALLER ANGLE               │
│                  AS A Cmin                                │
└─────────────────────────────────────────────────────────┘
                                │
                                │          S112
                                ▼                    True
                          ◇ Cmin IS A ◇──────────────────▶ (10B)
                          ◇ TERMINAL NODE ◇
                                │
                              False
                                │
                                ▼          S113
                          ◇ Cmin IS AN ◇──────── True ──▶ (10B)
                          ◇ ORIGINAL NODE ◇
                                │
                              False
                                │
                                ▼          S114
                          ◇ Cmin IS AN ◇──── False ──▶ (10A)
                          ◇ END POINT ◇
                                │
                              Ture
                                │
                                ▼
                             (10B)
```

# FIG.11

# FIG.12

# FIG.13

START

S138 — $r=0$ ← (13A)

S131 — FORMING A ROUTE FROM PRESENT POINT TO END POINT

S132 — $r>ret?$

—True→

S139 — $r=r+1$

False

S136 — $F_1 \leftarrow 1$

S133 — A ROUTE IS FORMED —False→

S137 — (14A)←False— $F_1=1$ $F_2=1$

True

True

S134 — NUMBER OF FORMED ROUTES IS Q

—True→

True

END

False

S135 — Q/2 ROUTES ARE FORMED

—False—

True → (14A)

EP 0 782 058 A1

# FIG.14

FORMING A ROUTE FROM END POINT TO PRESENT POINT — S141

r > ret? — S142

F_2 ← 1 — S146

A ROUTE IS FORMED — S143

F_1 = 1
F_2 = 1 — S147

NUMBER OF FORMED ROUTES IS Q — S144

END

Q/2 ROUTES ARE FORMED — S145

r = 0 — S148

EP 0 782 058 A1

# FIG.15

```
                    ┌─────────────┐
                    │    START    │
                    └──────┬──────┘
                           │
                           ▼
          ┌──────────────────────────────────┐
          │   i=0,1,········,n                │
          │   j=1,2,········,n+1              │─── S91
          │          i<j                      │
          └─────────────────┬────────────────┘
                            │◄──────────────────────────────┐
                            ▼                                │
          ┌──────────────────────────────────┐ ─ S92        │
          │  CONNECT  INTERMEDIATE  NODES     │         ┌─────────┐ ─ S94
          │       FROM Ci TO Cj               │         │  j=j+1  │
          └─────────────────┬────────────────┘         └────┬────┘
                            │                                │
    ┌─────────┐ ─ S96       ▼              S93               │
    │   i=j   │        ◇─────────────────◇                  │
    │  j=j+1  │◄── False ◇   CONNECTED    ◇── False ─────────┘
    └────┬────┘        ◇─────────────────◇
         │                       │ True
         │                       ▼              S95
         │                ◇─────────────────◇
         └──── False ─────◇ j=j+1(END POINT)?◇
                          ◇─────────────────◇
                                  │ True
                                  ▼
                           ┌─────────────┐
                           │     END     │
                           └─────────────┘
```

20

# FIG.16

# FIG.17

```
                    ┌─────────────┐
                    │    START    │
                    └──────┬──────┘
                           │
                           ▼
        ┌──────────────────────────────────┐
        │      OBTAIN A STRAIGHT            │
        │ DISTANCE L FROM PRESENT           │──── S21
        │    POINT TO END POINT             │
        └──────────────────┬───────────────┘
                           │
                           ▼
        ┌──────────────────────────────────┐
        │ COUNT NUMBER N OF CROSSING        │─ S22
        │     NODES IN A CIRCLE             │
        │   HAVING A DIAMETER L             │
        └──────────────────┬───────────────┘
                           │
                           ▼                    S23
              ◇───────────────────────────◇
             ╱   ROAD DENSITY (N/L) >      ╲──── True ────┐
             ╲       THRESHOLD             ╱              │
              ╲        (2000)             ╱               │
               ◇─────────┬───────────────◇               │
                  False  │        S24                     │    S25
                         ▼                                ▼
        ┌──────────────────────────┐      ┌──────────────────────────┐
        │   EMPLOY IMPROVED         │      │   EMPLOY GENIC           │
        │   Dijkstra                │      │   ALGORITHM              │
        └────────────┬─────────────┘      └────────────┬─────────────┘
                     │                                  │
                     ▼                                  ▼
              ┌─────────────┐                    ┌─────────────┐
              │     END     │                    │     END     │
              └─────────────┘                    └─────────────┘
```

# FIG.18

# FIG.19

# FIG.20

START

SEEK A COMMON CROSS NODE
IN TWO ROUTES — S171

COMMON NODE
DOES NOT EXIST — S172

True

False

CUT BOTH ROUTES AT
THE COMMON NODE — S173

EXCHANGE PARTIAL ROUTES AT
THE COMMON NODE — S174

END

# FIG 21

# FIG.22

# FIG.23

# FIG.24

```
        ┌──────────────┐
        │    START     │
        └──────┬───────┘
               │
               ▼
   ┌───────────────────────────┐
   │    ARBITRARILY DETERMINE   │──── S201
   │  CUTTING POINTS IN TWO ROUTES│
   └───────────┬───────────────┘
               │
               ▼
   ┌───────────────────────────┐
   │       CUT BOTH ROUTES      │──── S202
   └───────────┬───────────────┘
               │
               ▼
   ┌───────────────────────────┐
   │   EXCHANGE PARTIAL ROUTES  │──── S203
   │     BETWEEN BOTH ROUTES    │
   └───────────┬───────────────┘
               │
               ▼
   ┌───────────────────────────┐
   │  DETERMINE INTERMEDIATE    │──── S204
   │   NODES SO AS TO FORM      │
   │   COMPLETE BOTH ROUTES     │
   └───────────┬───────────────┘
               │
               ▼
        ┌──────────────┐
        │     END      │
        └──────────────┘
```

# FIG.25

# FIG.26

# FIG.27

# FIG.28

START

SELECT AN ARBITRARY
NODE AS A NEW NORDE
FOR MUTATION          — S241

EXCHANGE THE NEW NODE          — S242
WITH AN ARBITRARY NORDE
IN A CIRCLE HAVING A DIAMETER
OF DISTANCE BETWEEN PRESENT
POINT AND END POINT

SET INTERMEDIATE NODES SO AS TO          — S243
PROVIDE A ROUTE

END

# FIG.29

```
        ┌─────────┐
        │  START  │
        └─────────┘
             │
             ▼
   ┌──────────────────────┐
   │ PROVIDE PRELIMINARY  │──S41
   │      ROUTES          │
   └──────────────────────┘
             │
             ▼
   ┌──────────────────────┐
   │ VALUE ADAPTABILITY OF│──S42
   │    SELECTED ROUTES   │
   └──────────────────────┘
             │
             ▼
   ┌──────────────────────┐
   │ SELECT A PAIR OF     │──S43
   │ ROUTES BASED ON THE  │
   │      VALUATION       │
   └──────────────────────┘
             │
             ▼
   ┌──────────────────────────┐
   │ CUT THE TWO ROUTES AND   │──S44
   │ EXCHANGE PARTIAL ROUTES  │
   │ TO PROVIDE NEW ROUTES    │
   │     (CROSSING-OVER)      │
   └──────────────────────────┘
             │
             ▼
   ┌──────────────────────────┐
   │ EXCHANGE A NODE IN ONE OF│──S45
   │ THE NEW ROUTES WITH      │
   │ ANOTHER NODE OTHER THAN  │
   │ NODES IN THE NEW ROUTES  │
   │ TO PROVIDE NEW ROUTE     │
   │      (MUTATION)          │
   └──────────────────────────┘
             │
             ▼
   ╱────────────────────╲  S46
   ╲ ENDING CONDITIONS  ╱──False──┐
   ╱ ARE SATISFIED      ╲         │
   ╲────────────────────╱         │
             │True                │
             ▼                    │
        ┌─────────┐               │
        │   END   │               │
        └─────────┘
```

European Patent
Office

**EUROPEAN SEARCH REPORT**

Application Number

EP 96 12 0846

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP 0 504 854 A (MATSUSHITA ELECTRIC IND CO LTD) 23 September 1992<br>* page 2, line 11 - page 3, line 12 *<br>* page 4, line 8 - page 6, line 14 *<br>* page 9, line 21 - page 10, line 37 *<br>* figures 1,5,7,9 * | 1 | G05D1/02<br>G01C21/20 |
| A | EP 0 587 892 A (TSUYUKI TOSHIO) 23 March 1994<br>* column 7, line 13 - column 8, line 10; figures 1,3,4 * | 1 | |
| A | SAITO T ET AL: "AUTOMABILE NAVIGATION SYSTEM USING BEACON INFORMATION"<br>11 September 1989 , PROCEEDINGS OF THE VEHICLE NAVIGATION AND INFORMATION SYSTEMS CONFERENCE. (VNIS), TORONTO, SEPT. 11 - 13, 1989, NR. CONF. 1, PAGE(S) 139 - 145 , REEKIE D;CASE E; TSAI J XP000089879<br>* abstract *<br>* page 142, right-hand column, paragraph 3 *<br>* figure 9 * | 1 | |
| A | EP 0 675 341 A (HONDA MOTOR CO LTD) 4 October 1995<br>* abstract *<br>* column 20, line 10 - line 56; figure 9 * | 1 | TECHNICAL FIELDS SEARCHED (Int.Cl.6)<br><br>G05D<br>G01C |
| A | YILIN ZHAO ET AL: "AN ADAPTIVE ROUTE-GUIDANCE ALGORITHM FOR INTELLIGENT VEHICLE HIGHWAY SYSTEMS"<br>26 June 1991 , PROCEEDINGS OF THE AMERICAN CONTROL CONFERENCE, BOSTON, JUNE 26 - 28, 1991, VOL. 3, PAGE(S) 2568 - 2573 , INSTITUTE OF ELECTRICAL AND ELECTRONICS ENGINEERS XP000269091<br>* abstract * | 1 | |

The present search report has been drawn up for all claims

| Place of search | Date of completion of the search | Examiner |
|---|---|---|
| MUNICH | 11 April 1997 | Helot, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)